# EUROPEAN PATENT APPLICATION

(11) **EP 1 995 869 A2**
(43) Date of publication of application: **26.11.2008**
(21) Application number: 08156825.5
(22) Date of filing: 23.05.2008
(51) Int. Cl.: H02P 21/14

(54) **Synchronous motor control device and method for optimizing synchronous motor control**

(30) Priority: 24.05.2007 JP 2007138007
(71) Applicant: Aisin Seiki Kabushiki Kaisha, Kariya-shi, Aichi 448-8650 (JP)
(72) Inventor: Yamada, Naoki, Kariya-shi Aichi 448-8650 (JP)
(74) Representative: TBK-Patent

(57) **Abstract**

A synchronous motor control device, includes a coordinate transformation portion (2) for coordinate transforming motor currents (iu, iv, iw) applied to respective three phases (U-phase, V-phase, W-phase) of a synchronous motor (1) into a d-axis, corresponding to a direction of a magnetic field generated by a permanent magnet arranged at a rotor of the synchronous motor (1), and a q-axis orthogonal to the d-axis, a current command calculation portion (4) for calculating a d-axis current command (Idr) and a q-axis current command (Iqr) from a target torque, a voltage command calculation portion (5) for calculating a d-axis voltage command (Vdr) and a q-axis voltage command (Vqr), an inverse coordinate transformation portion (6) for inversely coordinate transforming the d-axis voltage command (Vdr) and the q-axis voltage command (Vqr) into three-phase voltage commands (vu, vv, vw), and a torque ripple estimating portion (9) for estimating a torque ripple and feed-forwarding the estimation results to the current command calculation portion (4) or the voltage command calculation portion (5).

## Description

### FIELD OF THE INVENTION

The present invention relates to a synchronous motor control device and a method for optimizing synchronous motor control.

### BACKGROUND

So called 'vector-control' is known as a method for controlling a synchronous motor. In the vector-control disclosed in, for example JP 2006320039A, motor current applied through each of three phases of the synchronous motor is coordinate-converted into a vector component that is transformable into vector components directed along a direct axis (hereinafter referred to as d-axis) corresponding to a direction of a magnetic field generated by permanent magnets arranged at a rotor and a quadrature axis (hereinafter referred to as a q-axis) orthogonal to the d-axis, and then a feedback control is executed. In order to improve a performance of the vector-control, various modifications have been proposed. For example, a synchronous motor control apparatus disclosed in JP 2001145399A suppresses a torque fluctuation by providing a function of modulating an interlinkage magnetic flux of the permanent magnets fluctuated in response to changes in temperature.

Various modifications for enhancing torque of the synchronous motor are also proposed. Specifically, an interior permanent magnet synchronous motor (IPMSM) effectively utilizes a reluctance torque by variously modifying a shape of a magnet, by rearranging the magnet or by changing a path of a magnetic flux. The reluctance torque is a rotational force generated in response to changes of magnetic energy of a self-inductance. A total torque is enhanced by effectively utilizing the reluctance torque in addition to a main torque (a magnetic torque) generated by a product of an armature current and the interlinkage magnetic flux generated by the magnetic field of the permanent magnet. Hence, various modifications on the motor structure have been suggested for maximizing the magnetic torque and the reluctance torque.

For example, a motor structure that prevents decrease of mechanical strength of a rotor and increases the reluctance torque is disclosed in JP2001211618A. According to the motor disclosed in JP2001211618A, two different types of slits are provided at the motor so as to be alternated from an outer periphery of the motor in order to increase a difference between magnetic resistance of the d-axis and magnetic resistance of the q-axis while maintaining the mechanical strength of the rotor. Furthermore, a motor structure for a linear motor adaptable to use the magnetic torque and the reluctance torque is disclosed in JP2002186244A. According to the motor structure disclosed in JP2002186244A, a permanent magnet is imbedded into a magnetic material in order to generate a difference between magnetic resistance of a d-axis and magnetic resistance of a q-axis, and further, slits are provided at a magnetic material, so that the magnetic flux of the permanent magnet is not shunted within the magnetic material.

Conventionally, when the synchronous motor structure is modified in order to increase output torque, magnetic flux concentration occurs and then, localized magnetic saturation occurs. The magnetic saturation phenomenon caused by the synchronous motor structure appears as a disturbance that is not expressible in a voltage equation for calculating a motor driving voltage in the vector-control, and becomes a factor for torque fluctuation occurring at the synchronous motor. Further, in a case of the motor utilizing the permanent magnet, the magnetic flux of the permanent magnet remains even when the current is not applied at the stators. As a result, a torque ripple is generated between the permanent magnet and stator cores. Theoretically, the torque ripple appears as a ripple corresponding to a common multiple of a number of poles of the permanent magnet and a number of salient poles of the stators. However, in the actual use of the motor, the torque ripple appears as a ripple on which a high-order harmonic is additionally superimposed. The high-order harmonic has a higher frequency than a carrier frequency used for a pulse width modulation control (PWM control) executed as a conventional motor control. Hence, elimination of the high-order harmonic by the feedback control is difficult.

The voltage equation, a torque equation and the like used for the vector-control include a d-axis inductance and a q-axis inductance. In the conventional vector-control, the d-axis inductance and the q-axis inductance are treated as constants. However, in practice, the d-axis inductance and the q-axis inductance vary, because the d-axis magnetic resistance and the q-axis magnetic resistance vary depending on a rotational angle of the rotor. Furthermore, the d-axis and q-axis inductances also vary when the magnetic saturation occurs due to an increase of the current. High-order harmonic components are also superimposed to changes of the d-axis and q-axis inductances. As a result, the torque fluctuation, the torque ripple and the like occur in the vector-control in which the voltage equation, the torque equation and the like are used. Therefore, a vector-control that appropriately follows a change of inductance is needed.

Although the synchronous motor control device disclosed in JP2001145399A modifies a value of a q-axis inductance, the q-axis inductance is still used as a constant. In other words, when a correction value of resistance components of a stator coil exceeds a normal limit, the q-axis inductance is only modified so that the correction value of the resistance components remains within the normal limit.

A need thus exists to provide a synchronous motor control device that appropriately follows changes of an inductance of a synchronous motor to which a vector-control is executed, and that suppresses a torque fluctuation and a torque ripple. Further, the present invention intends to provide a method for optimizing the synchronous motor.

### SUMMARY OF THE INVENTION

According to an aspect of the present invention, a synchronous motor control device, includes a coordinate transformation portion for coordinate transforming motor currents applied to respective three phases of a synchronous motor into a d-axis, corresponding to a direction of a magnetic field generated by permanent magnets arranged at a rotor of the synchronous motor, and a q-axis orthogonal to the d-axis, a current command calculation portion for calculating a d-axis current command and a q-axis current command from a target torque on the basis of a torque equation representing a torque of the synchronous motor) by using the interlinkage magnetic flux, formed by the magnetic field, a d-axis inductance, a q-axis inductance, a d-axis current and a q-axis current, a voltage command calculation portion for calculating a d-axis voltage command and a q-axis voltage command from the d-axis current command and the q-axis current command respectively on the basis of a voltage equation representing a voltage driving the synchronous motor by using the interlinkage magnetic flux, formed by the magnetic field, impedances, including the d-axis inductance and the q-axis inductance, of stator coils of the synchronous motor, the d-axis current and the q-axis current, an inverse coordinate transformation portion for inversely coordinate transforming the d-axis voltage command and the q-axis voltage command into three-phase voltage commands of respective three-phases of the synchronous motor, and a torque ripple estimating portion for estimating a torque ripple by setting the d-axis inductance and the q-axis inductance in the torque equation as a function of the d-axis current and an electrical angle and a function of the q-axis current and the electrical angle respectively, and feed-forwarding the estimation results to the current command calculation portion or the voltage command calculation portion.

Accordingly, the d-axis inductance and the q-axis inductance used in the torque equation for calculating the reluctance torque are set as the function of the d-axis current and the electrical angle and the function of the q-axis current and the electrical angle, respectively. Then, the torque ripple estimating portion estimates the torque ripple caused by the changes of the d-axis and q-axis inductances. Thus, the synchronous motor control device that appropriately follows changes in the inductance of the synchronous motor that is vector-controlled and suppresses the torque ripple is achieved.

According to another aspect of the present invention, the d-axis inductance and the q-axis inductance in the voltage equation are set as the function of the d-axis current and the electrical angle and the function of the q-axis current and the electrical angle, respectively.

Accordingly, the inductances included to the impedance components of the stator coils are set as the functions of the current and the electrical angle, respectively. An error in each of the impedances influences on the d-axis and q-axis voltage commands calculated on the basis of the voltage equation and further, becomes a cause of the torque fluctuation and the torque ripple. However, by setting the d-axis and q-axis inductances as the functions respectively, the errors in the d-axis and q-axis inductances are prevented and further, the error in each of the impedances including the d-axis and q-axis inductances is prevented. As a result, an error in the d-axis voltage command and the q-axis voltage command is prevented. Therefore, the synchronous motor control device that appropriately follows the changes in the d-axis and q-axis inductances of the synchronous motor that is vector-controlled and further, that suppresses the torque fluctuation and the torque ripple, is achieved.

According to a further aspect of the present invention, the voltage command calculation portion calculates the d-axis voltage command and the q-axis voltage command on the basis of the voltage equation to which a disturbance voltage estimating term, which indicates disturbance voltages relative to the d-axis current and the q-axis current estimated by identifying high-order coefficients of harmonic components included into three-phase interlinkage magnetic flux waves, is added.

Accordingly, the three-phase interlinkage magnetic flux waves include the high-degree harmonics other than fundamental harmonics. The high-degree harmonics become a cause for generating the disturbance voltages in the voltage equations. Specifically, because conductive velocity of the high-degree harmonics is faster than a control speed of the feedback control, it is difficult to eliminate the high-degree harmonics by the feedback control. Therefore, it is difficult to prevent the disturbance voltages with the feedback control. According to the present invention, the disturbance voltages generated at the synchronous motor are accurately estimated by identifying the high-order coefficient of the high-degree harmonic components. Then, the disturbance estimating terms representing the estimated disturbance voltages are added to the voltage equations, respectively. Thus, without relying on the feedback control, the preliminarily accurately estimated disturbance voltages are incorporated in the calculation of the control voltages of the synchronous motor. As a result, the synchronous motor control device that suppresses the torque fluctuation, the torque ripple and the like is achieved.

According to a further aspect of the present invention, a method for optimizing a synchronous motor control for coordinate transforming motor currents applied to respective three phases of a synchronous motor into a d-axis, corresponding to a direction of a magnetic field generated by permanent magnets arranged at a rotor of the synchronous motor, and a q-axis orthogonal to the d-axis, and for optimizing a vector-control of the synchronous motor based on a torque equation, using an interlinkage magnetic flux, formed by the magnetic field, a d-axis inductance, a q-axis inductance, d-axis current and q-axis current, and a voltage equation using the interlinkage magnetic flux, formed by the magnetic field, impedances, including the d-axis inductance and the q-axis inductance, of stator coils of the synchronous motor, the method includes an inductance linearization process for setting the d-axis inductance and the q-axis inductance in the torque equation and the voltage equation as a function of the d-axis current and an electrical angle and a function of the q-axis current and the electrical angle, respectively.

Accordingly, the d-axis and q-axis inductances used for calculating the reluctance torque in the torque equation are set as the function of the d-axis current and the electrical angle and the function of the q-axis current and the electrical angle, respectively. This allows the synchronous motor control device to feed-forward in the vector-control by estimating the torque ripple caused by the fluctuations of the d-axis and q-axis inductances. Further, the d-axis and q-axis inductances included in each of the impedances of the stator coils are set as the functions between the current and the electrical angle. By setting the d-axis and q-axis inductances Lq as the functions, the errors in the d-axis and q-axis inductances are prevented and further, the error in the each of impedances including the d-axis and q-axis inductances is prevented. As a result, the error in the d-axis and q-axis voltage commands calculated by using the voltage equation is prevented. Hence, the vector-control of the synchronous motor is optimized so as to appropriately follow the fluctuation of the d-axis and q-axis inductances and so as to suppress the torque fluctuation and the torque ripple.

Accordingly to a further aspect of the present invention, the inductance linearization process includes, a nonlinear inductance calculation process for calculating the d-axis inductance and the q-axis inductance as a nonlinear three-dimensional map indicating a relationship with the d-axis current and the electrical angle and a nonlinear three-dimensional map indicating a relationship with the q-axis current and the electrical angle, respectively, a harmonic component extracting process for extracting harmonic components superimposed on the d-axis inductance and the q-axis inductance on the basis of the nonlinear three-dimensional maps, respectively, a weight function setting process for setting weight functions by using the d-axis current and the q-axis current respectively that act as weighting coefficients of the harmonic components, and an offset function setting process for setting amplitude offset functions by using d-axis current and the q-axis current that act as weighting coefficients of amplitude offset components of the d-axis inductance and the q-axis inductance, respectively.

Accordingly, the d-axis and q-axis inductances are nonlinear and are three-dimensionally changed in response to the relationship between the d-axis and q-axis currents and the electrical angle, respectively. According to the embodiment, the d-axis and q-axis inductances are calculated as the three-dimensional maps, respectively. Then, the fluctuation components of the d-axis and q-axis inductances are characterized on the basis of the three-dimensional maps, respectively. As a result, the d-axis and q-axis inductances are linearized as the d-axis inductance function and the q-axis inductance function, respectively. Specifically, because the voltage equation includes differentiation elements, the d-axis and q-axis inductances becoming differentiable by the linearization is of importance. By the linearization of the d-axis and q-axis inductances, the vector-control of the synchronous motor using the voltage equation is optimized so as to appropriately follow the fluctuations of the d-axis and q-axis inductances.

According to a further aspect of the present invention, the method for optimizing the synchronous motor control further includes a disturbance estimating process for optimizing the voltage equation by adding a disturbance voltage estimating term indicating estimated disturbances relative to a d-axis voltage and a q-axis voltage calculated by the voltage equation.

Accordingly, the three-phase interlinkage magnetic flux waves include the high-degree harmonics other than the fundamental harmonics. The high-degree harmonics become a cause for generating the disturbance voltages in the voltage equations. Therefore, by identifying the high-order coefficient of the high-degree harmonic components, the disturbance voltages generated at the synchronous motor are accurately estimated. According to the above-mentioned embodiment, the voltage equation is optimized by adding the disturbance estimating term indicating the estimated disturbance voltages to the voltage equations, respectively. Therefore, the vector-control is optimized by incorporating the preliminarily accurately estimated disturbance voltages in the calculation of the control voltages of the synchronous motor.

According to a further aspect of the present invention, the disturbance estimating process includes, a magnetic flux wave obtaining process for obtaining interlinkage magnetic flux waves when the synchronous motor is driven without any loads applied thereto, an expansion process for expanding each of the interlinkage magnetic flux waves in series into a polynomial where a trigonometric function is used, a differentiation process for differentiating the polynomials of the interlinkage magnetic flux waves and then converting the differentiated polynomials of the interlinkage magnetic flux waves into polynomials of voltage waves, respectively, a coordinate transformation process for coordinate transforming the polynomials of the voltage waves into polynomials indicating a d-axis voltage wave and a q-axis voltage wave, an extraction process for extracting one or more terms indicating relatively large values among terms of each of the polynomials indicating the d-axis voltage wave and the q-axis voltage wave respectively as each of a d-axis disturbance voltage and a q-axis disturbance, and a disturbance term adding process for adding the disturbance voltage estimating term indicating the d-axis disturbance voltage and the q-axis disturbance to the voltage equation on the basis of the extraction results.

Accordingly, the high-degree harmonics other than the fundamental harmonics, more specifically the harmonic components that has a great influence on the disturbance voltages, are included in the three-phase interlinkage magnetic flux waves. By expanding the interlinkage magnetic flux waves into the polynomials with the trigonometric functions, the harmonic components having the great influence may be identify in response to magnitude of the coefficient in the polynomial. The voltage is obtained by differentiating each of the interlinkage magnetic fluxes, and each of the three-phase voltage waves is represented in a vector-converted state where each of the three-phase voltage waves is transformed into the d-axis and q-axis in the voltage equation. Hence, in the present invention, the high-order harmonic components of the disturbance voltages are identified in response to a coefficient in a vector-converted polynomial. Then, the estimated disturbance voltages are added to the voltage equations as the disturbance voltage estimating terms that indicate the disturbance voltages, respectively. As a result, the vector-control is optimized so as to incorporate the accurately estimated disturbance voltages in the calculation of the control voltages of the synchronous motor.

According to a further aspect of the present invention, the synchronous motor control device optimized by any one of the above-mentioned method for optimizing the synchronous motor control,

Accordingly, by means of the optimizing method of the synchronous motor control, the synchronous motor control device is optimized so as to appropriately follow the fluctuations of the d-axis and the q-axis inductances. As a result, the synchronous motor control device that appropriately follows the fluctuations of the d-axis and q-axis inductances of the synchronous motor that is vector-controlled, is achieved.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a block diagram schematically illustrating a structural example of a synchronous motor control device associated with an embodiment;

Fig. 2 is an explanatory view showing a principle of a coordinate transformation;

Fig. 3 is a vector diagram for explaining a phase angle of an armature current;

Fig. 4A is a graph indicating characteristics of a d-axis inductance;

Fig. 4B is a graph indicating characteristics of the d-axis inductance;

Fig. 5 is a flowchart illustrating an example of procedures for linearization of the d-axis inductance;

Fig. 6A is a graph indicating characteristics of a q-axis inductance;

Fig. 6B is a graph indicating characteristics of the q-axis inductance;

Fig. 7 is a flowchart illustrating an example of procedures for linearization of the q-axis inductance;

Fig. 8 is a waveform chart illustrating three-phase interlinkage magnetic fluxes in a case where a motor is driven without any load applied thereto;

Fig. 9 is a flowchart illustrating an example of procedures for adding a disturbance estimating term to a voltage equation;

Fig. 10 is a waveform chart illustrating three-phase voltage waves obtained by substituting the interlinkage magnetic fluxes illustrated in Fig. 8;

Fig. 11 is a waveform chart illustrating a d-axis voltage wave and a q-axis voltage wave obtained by transforming the three-phase voltage waves into d-axis and q-axis coordinates, respectively;

Fig. 12 is a graph showing characteristics of the linearized d-axis and q-axis inductances;

Fig. 13 is a flowchart illustrating an example of procedures for estimating a torque ripple;

Fig. 14 is a graph showing an example of torque characteristics having the torque ripple;

### DETAILED DESCRIPTION

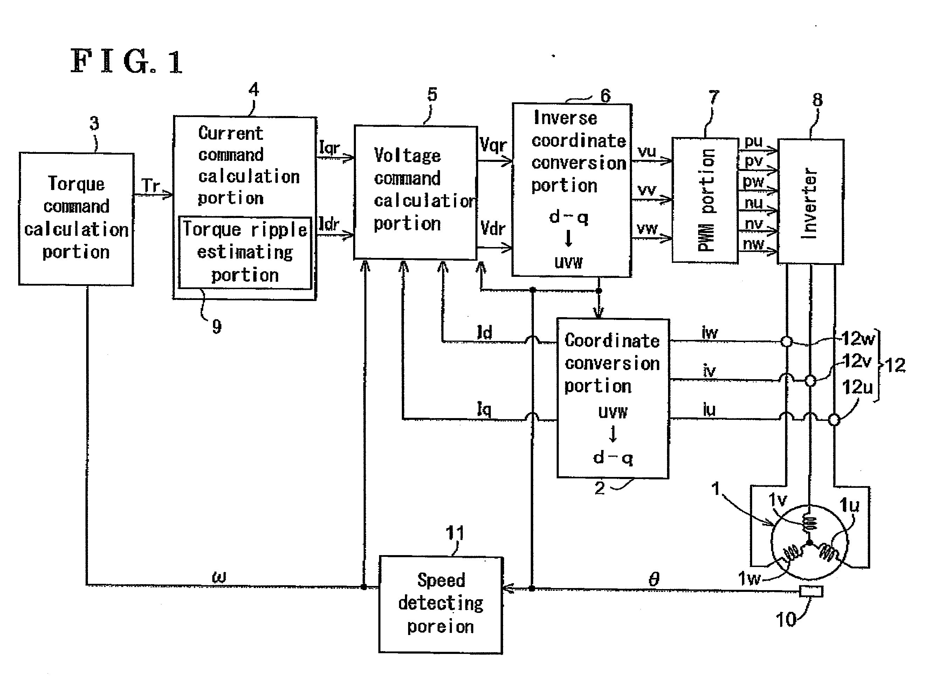

An embodiment of a synchronous motor control device will be described below in accordance with the attached drawings. Fig. 1 is a block diagram schematically illustrating a configuration example of the synchronous motor control device. A motor 1 is a three-phase synchronous motor. The motor 1 includes a rotor having permanent magnets and a stator that generates a magnetic field for applying a rotational force to the rotor. The stator includes stator coils 1u, 1v and 1w that form U-phase, V-phase and W-phase, respectively. One end of each of the stator coils 1u, 1v and 1w is commonly connected at an electrical neutral point so as to from a Y-connection (a star-connection). The other end of each of the stator coils 1u, 1v and 1w is connected to an inverter 8 that will be described below. As illustrated in Fig. 1, the synchronous motor control device of the embodiment drives the stator coils 1u, 1v and 1w that forms the three-phase via the inverter 8 in response to a target torque applied thereto from a torque command calculation portion 3.

The synchronous motor control device includes functional portions such as a coordinate transformation portion 2, a current command calculation portion 4, a voltage command calculation portion 5, an inverse coordinate transformation portion 6, a pulse width modulating portion 7 (hereinafter referred to as a PWM portion 7), a speed detecting portion 11 and the like. The functional portions including the torque command calculation portion 3 are configured with, for example, a microcomputer and the like. Therefore, the functional portions do not need to be configured to be physically independent as long as each of the functional portions is configured to be achievable by means of a program and the like. The functional portions may be configured by combining electronic circuits such as a logic circuit, an application specific standard product (ASSP) and the like. Details of each of the functional portions will be described below.

The inverter 8 that drives the motor 1 transforms direct current voltage (DC voltage) into alternating current voltage (AD voltage) based on inverter driving signals pu, pv, pw, nu, nv and nw. The inverter 8 is configured with a bridge circuit whose details will be described below. Two switching elements are arranged in series between an electric power source VDC and a ground, i.e. between a positive side and a negative side of a direct current power source. In other words, a series circuit having a high-side switch at the positive side and a low-side switch at the negative side is formed. The bridge circuit is formed by three pairs of series circuit described above being connected in parallel so as to correspond to the U-phase, V-phase and W-phase, respectively. The other end of each of the stator coils 1u, 1v and 1w is connected to a connecting point of the high-side switch and the low-side switch of each of the series circuits. The inverter driving signals pu, pv, pw are signals for driving high-side switches of the U-phase, V-phase and W-phase, respectively. The inverter driving signals nu, nv and nw are signals for driving low-side switches of the U-phase, V-phase and W-phase, respectively.

For example, a power metal-oxide-semiconductor-field-effect-transistor (a power MOSFET, which is hereinafter referred to simply as FET for convenience) is used for the switching elements. In a case where n-channeled FET is used for both of the high-side switch and the low-side switch, a boost circuit such as a charge pump is additionally provided. The inverter driving signals pu, pv and pw that drive the high-side switches respectively are boosted by the boost circuit. A flywheel diode, which is also referred to as a free-wheel diode, connected in parallel with the FET is provided at each of the FET. Additionally, the flywheel diode may be included into the switching elements such as the FET. Further, other semiconductor elements such as a power transistor, an intelligent power device (IPD, an intelligent power module (IPM) and the like my be used as the switching elements.

A current sensor 12 (12u, 12v, 12w) that serves as a current detecting portion is provided on lines connecting the inverter 8 and the stator coils 1u, 1v and 1w. The current sensor 12 detects the motor current applied to each of the three-phase stator coils 1u, 1v and 1w. In this embodiment, current iu, iv and iv applied to the three-phase stator coils 1u, 1v and 1w respectively balance each other. In other words, because a sum of instantaneous values of the current iu, iv and iw of the stator coils 1u, 1v and 1w respectively is zero, the current of two phases may be detected and,then the current of the rest may be estimated by a calculation at the coordinate transformation portion 2 and the like. In this case, the coordinate transformation portion 2 serves also as a part of the current detecting portion.

The motor 1 is provided with a rotational angle sensor (rotation detecting portion) such as a resolver 10 for detecting a rotational angle (mechanical angle) of the rotor of the motor 1. The resolver 10 is set depending on the number of poles (number of pairing poles) of the rotor of the motor 1. The resolver 10 converts the rotational angle of the rotor into an electrical angle θ and outputs a signal corresponding to the electrical angle θ. The speed detecting portion 11 detects number of rotations of the motor 1 (angular velocity ω) based on the output of the resolver 10.

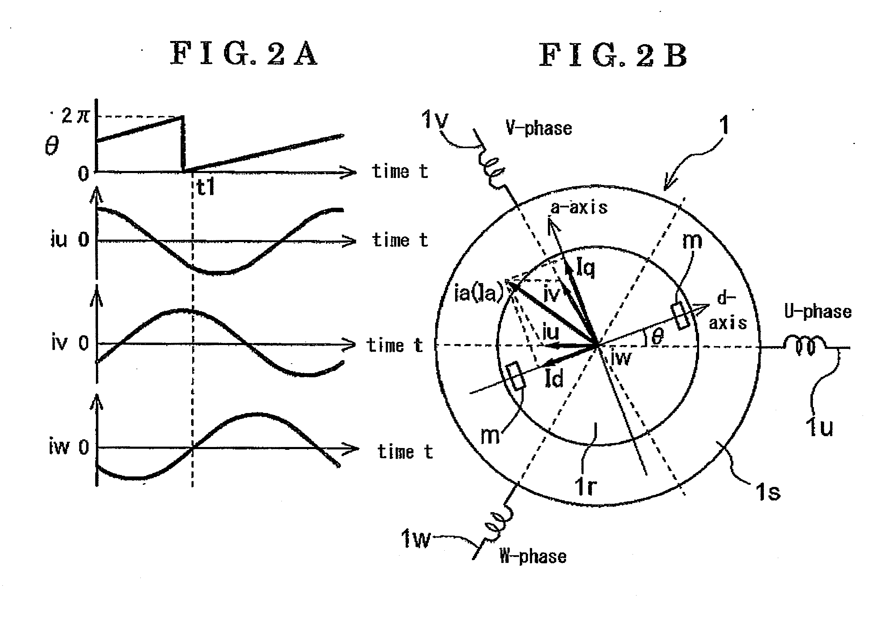

The coordinate transformation portion 2 is a functional portion that transforms the three-phase motor current iu, iv and iw of the motor 1, which are gained in the above-mentioned manner, into coordinates based on the rotational angle (electrical angle θ) of the rotor. More specifically, the coordinate transformation portion 2 transforms each of the three-phase motor current iu, iv and iw into a coordinate indicating a vector component Id of a direct axis (d-axis) corresponding to a direction of a magnetic field generated by the permanent magnets arranged at the rotor of the motor 1 and a coordinate indicating a vector component Iq of a quadrature axis (q-axis) that is orthogonal to the d-axis. Fig. 2 is a view for explaining a principle of the coordinate transformation. In Fig. 2, a rotor 1r having bipolar (a pair of poles) permanent magnets m is employed, and a rotational angle of the rotor 1r corresponds to the electric angle θ. Fig. 2A is a waveform chart illustrating a relationship between a three-phase alternating current waveform and the electrical angle θ. In this embodiment, the three-phase alternating current waveform corresponds to positions of the magnetic poles. Fig. 2B is a view for explaining a positional relationship between the rotor 1r and a stator 1s at time t1 in Fig. 2A, and further, Fig. 2B illustrates current vectors before and after the execution of coordinate transformation. In Fig. 2B, the rotational angle (the electrical angle θ) is illustrated as a position of magnetic pole of the rotor 1r with reference to a salient position of the U-phase of the stator 1s.

As illustrated in Fig. 2B, a direction of the magnetic field generated by the permanent magnets m arranged at the rotor 1r is represented as the d-axis, and a direction that is orthogonal to the d-axis is represented as the q-axis. As illustrated in Fig. 2A, a torque is generated by applying the sine wave three-phase alternating current iu, iv and iw to the stator coils 1u, 1v and 1w respectively in response to the position of the poles of the rotor 1r. A current vector ia indicating a sum of armature currents becomes a sum of vectors of the three-phase current iu, iv and iw, as illustrated in Fig. 2B when the rotor 1r is positioned at the position to form magnetic pole θ (the electrical angle θ) at the time t1 in Fig. 2A. In this embodiment, Fig. 2B illustrate the current vector ia as a vectorial sum of the current iu of the U-phase and the current iv of the V-phase because the current of the W-phase is zero. When the current vector ia (=Ia) generated that the rotor 1r is positioned at the position of magnetic pole θ is decomposed into vectors relative to the d-axis and the q-axis, d-axis current Id and q-axis current Iq are obtained. Each of the three-phase motor current iu, iv and iw is transformed into the d-axis current Id and the q-axis current Iq.

Specifically in an interior permanent magnet synchronous motor (hereinafter referred to as an IPMSM), inductances corresponding to the stator coils 1u, 1v and 1w respectively changes in response to a positional relationship between each of the stator coils 1u, 1v and 1w and the rotor 1r, i.e. a positional relationship between each of the stator coils 1u, 1v and 1w and the position of magnetic poles. When the rotor 1r is rotated so that any one of the stator coils 1u, 1v and 1w is positioned so as to correspond to the direction of the d-axis that corresponds to the direction of the magnetic poles, a magnetic path of any one of the stator coils 1u, 1v and 1w is blocked because the stator coils 1u, 1v and 1w have magnetic resistance proportional to a inverse of magnetic permeability of the permanent magnets. On the other hand, when the rotor 1r is rotated so that any one of the stator coils 1u, 1v and 1w is positioned so as to correspond to the direction of the q-axis, the magnetic path of any one of the stator coils 1u, 1v and 1w is less likely to be blocked because the currents iu, iv and iw pass through a soft magnetic material such as a silicon steel having a large magnetic permeability and a value of the magnetic resistances of the stator coils 1u, 1v and 1w is dramatically reduced compared to a case where each of the currents iu, iv and iq pass through the permanent magnets. As a result, a q-axis inductance Lq has a larger value than a d-axis inductance Ld. Positions of the d-axis and the q-axis corresponding to the stator coils 1u, 1v and 1w change in response to the position of magnetic poles. Hence, the d-axis and q-axis inductances Ld and Lq corresponding to the stator coils 1u, 1v and 1w change.

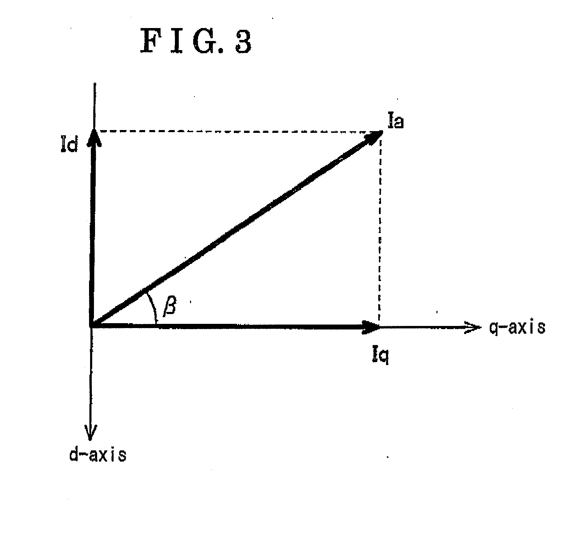

Therefore, in addition to a magnetic torque (main torque) generated by the permanent magnets, a reluctance torque is generated due to a difference between the d-axis inductance Ld and the q-axis inductance Lq. In a case where a surface permanent magnet synchronous motor (which is referred to as surface PMSM or SPMSM) that does not actively use the reluctance torque is employed, motor working efficiency is enhanced when the SPMSM is controlled with the d-axis vector component Id as zero (Id=0). However, in a case where the SPMSM is employed and reluctance torque is also utilized, the motor working efficiency is enhanced when the SPMSM is controlled with the d-axis vector component Id as a value other than zero (Id ≠ 0). In the SPMSN, an operational point at which a maximum motor working efficiency is achieved changes in response to a current phase angle β formed by the d-axis current Id and the q-axis current Iq. The current phase angle β is an angle represented by the following equation (equation 1) and in Fig. 3.

$β = {tan}^{- 1} \left(id/iq\right)$

A total torque of the motor 1 is represented by the following torque equation (equation 2) where Pn indicates number of pairing poles, ψa indicates an interlinkage magnetic flux of an armature, ia indicates the armature current, Ld indicates the d-axis inductance, Lq indicates the q-axis inductance and β indicates the current phase angle.

$T = Pn \left\{ψa⋅Ia⋅cosβ+\frac{1}{2}⁢\left(Lq-Ld\right)⁢{Ia}^{2}⋅sin\left(2⁢β\right)\right\}$

In equation 2, the magnet torque is represented by the first term within the braces, and the reluctance torque is represented by the second term. Additionally, in view of equation 1 and Fig. 3, the following equations (equations 3 to 5) are apparently satisfied. Hence, torque equation 2 is also represented by equation 6.

${Ia}^{2} = {Id}^{2} + {Iq}^{2}$ $Id = Ia ⋅ sinβ$ $Iq = Ia ⋅ cosβ$ $T = Pn \left\{ψa⋅Iq+\left(Lq-Ld\right)⁢Id⋅Iq\right\}$

As described above, the armature current Ia includes the d-axis current Id and the q-axis current Iq. Thus, the torque equations represented in equations 2 and 6 are equations that represents the torque of the motor 1 by using the interlinkage magnetic flux ψa, the d-axis inductance Ld, q-axis inductance Lq, d-axis current Id and the q-axis current Iq.

The torque command calculation portion 3 is the functional portion that calculates a total torque T necessary for the motor 1 and outputs a torque command Tr (target torque) to the current command calculation portion 4. When the motor 1 is adapted to electric appliances, for example, a washing machine, a necessary torque is calculated on the basis of an operation phase for washing, dehydration and the like, and an amount of the laundry and the like. In a case where the motor 1 is adapted as a driving device of, for example, an electric vehicle, a hybrid vehicle and a train, a necessary torque is calculated on the basis of command input via an accelerator and a brake and the like and detection results of a vehicle speed sensor and the like. Further, a feedback control using the angular velocity ω of the motor 1 detected by the speed detecting portion 11 is also executed.

The current command calculation portion 4 calculates a d-axis current command Idr and a q-axis current command Iqr from the torque command Tr calculated by the torque command calculation portion 3. For example, torque equation 2 may be transformed into an equation representing the armature current Ia. The current command calculation portion 4 may calculate the d-axis current command Idr an the q-axis current command Iqr by solving the transformed torque equation by substituting the torque command Tr or other parameters therein, and then by decomposing the armature current Ia into the d-axis vector and the q-axis vector on the basis of the phase angle β. The d-axis current command Idr and the q-axis current command Iqr may be calculated from equation 6.

The voltage command calculation portion 5 calculates a d-axis voltage command Vdr and a q-axis voltage command Vqr from the d-axis current command Idr and the q-axis current command Iqr respectively, each of which is calculated by the current command calculation portion 4, on the basis of a voltage equation. The voltage equation representing a d-axis voltage Vd and a q-axis voltage Vq is represented by the following equation (equation 7) where ψa indicates the interlinkage magnetic flux of the armature, ω indicates the angular velocity, Id indicates the d-axis current, Iq indicates the q-axis current, Ld indicates the d-axis inductance, Lq indicates the q-axis inductance, Ra indicates an armature resistance and p indicates a differential operator.

$\left[\begin{matrix}Vd \\ Vq\end{matrix}\right] = \left[\begin{matrix}Ra + pLd & - ω ⁢ Lq \\ ω ⁢ Ld & Ra + pLq\end{matrix}\right] [ \begin{matrix}Id \\ Iq\end{matrix} ] + [ \begin{matrix}0 \\ ω ⁢ ψ ⁢ a\end{matrix} ]$

A left matrix of a first right term in equation 7 indicates an impedance of the stator coil 1u, 1v and 1w. Thus, equation 7 is a voltage equation representing the impedances of the stator coils 1u, 1v and 1w of the motor 1 including the interlinkage magnetic flux ψa, the d-axis inductance Ld and the q-axis inductance Lq and also representing the voltages that drive the motor 1 by using the d-axis current Id and the q-axis current Iq. The voltage command calculation portion 5 calculates the d-axis voltage Vd and the q-axis voltage Vq by substituting the d-axis current command Idr and the q-axis current command Iqr or the other parameters into voltage equation 7. The calculated d-axis voltage Vd and q-axis voltage Vq are output as the d-axis voltage command Vdr and the q-axis voltage command Vqr, respectively.

The inverse coordinate transformation portion 6 transforms the d-axis voltage command Vdr and the q-axis voltage command Vqr, which are calculated by the voltage command calculation portion 5, into three-phase voltage commands vu, vv and vw respectively by executing an inverse coordinate transformation inverse to the coordinate transformation executed by the coordinate transformation portion 2. The detailed explanation of the inverse coordinate transformation will be omitted because the inverse coordinate transformation is the inverse of the coordinate transformation described above in accordance with Figs. 2 and 3.

The PWM portion 7 generates the driving signals pu, pv, pw, nu, nv and nw for driving the six switching elements of the inverter 8 by executing the pulse width modulation (PWM) on the basis of the three-phase voltage commands vu, vv and vw. The driving signals pu, pv and pw are the driving signals for the switching elements that function as the high-side switches, respectively. The driving signals nu, nv and nw are the driving signals for the switching elements that function as the low-side switches, respectively. Additionally, a dead time is set at each of the driving signals in order to prevent a line between the positive side and the negative side of the electric power sources to be short-circuited when the high-side switches and the low-side switches, which are connected in series, are simultaneously turned on. Therefore, it may be preferable that a dead time compensation portion (not shown) is additionally provided to the synchronous motor control device illustrated in Fig. 1. Alternatively, the PWM portion 7 may be configured to include a dead time compensation function.

That is an outline of the vector control of the motor 1. The d-axis inductance Ld and the q-axis inductance L1 are used as constants in torque equations 2 and 6 and in voltage equation 7. Further, the interlinkage magnetic flux ψa is also used as a functional parameter having a sine wave characteristic. However, in practice, the d-axis inductance and the q-axis inductance vary because the d-axis magnetic resistance and the q-axis magnetic resistance vary depending on the rotational angle of the rotor. The d-axis inductance Ld varies in response to the d-axis current Id and the electrical angle θ, and the q-axis inductance Lq varies in response to the q-axis current Iq and the electrical angle θ. Thus, it may be preferable that the d-axis inductance function Ld (Id, θ) and the q-axis inductance function Lq (Iq, θ) are used as the inductances in the torque equations and the voltage equations.

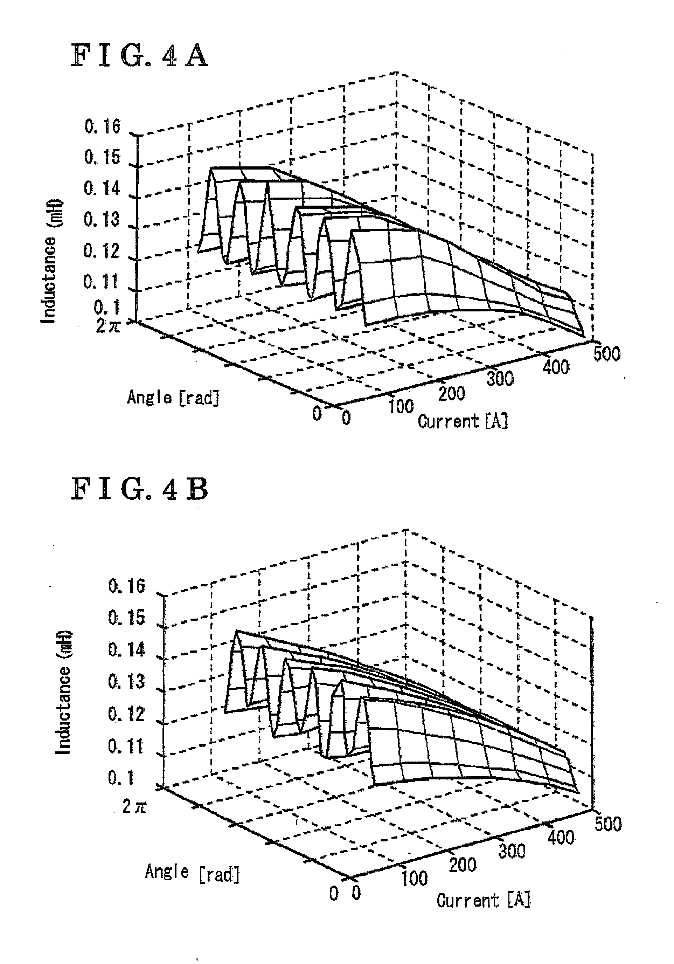

Fig. 4A is a three-dimensional graph illustrating a result of simulated characteristics of the d-axis inductance Ld gained by using an electromagnetic field simulator. As is apparent from the graph illustrated in Fig. 4A, the d-axis inductance Ld has nonlinear characteristics. The voltage equation includes the differential operator p. Therefore, in order to use the d-axis inductance function Ld (Id, θ) in the voltage equation, the d-axis inductance function Ld (Id, θ) needs to be linearized so as to be differentiable.

Referring to the graph of the simulation results, the d-axis inductance Ld has a periodicity relative to the electrical angle θ, and further, the d-axis inductance Ld has a decreasing tendency relative to an increase of the d-axis current Id. Further, when an amount of the d-axis current Id is small, a periodicity relative to a sixth order harmonic of the electrical angle θ is found. When an amount of the d-axis current Id is large, a periodicity relative to a third order harmonic of the electrical angle θ is found. In other words, the d-axis inductance Ld is a composition of the sixth order harmonic and the third order harmonic. Then, the d-axis current Id acts as a weight function of the sixth order harmonic and the third order harmonic. In the simulation, the d-axis inductance of when the d-axis current Id is at its maximum (i.e. Id = 500A) decreases to about half of when the d-axis current Id is small (i.e. Id = 50A). This indicates that a magnetic saturation occurs. Additionally, when the d-axis current Id is large, sixth order harmonic components are decreased and the third order harmonic becomes dominant. This indicates that a localized magnetic saturation occurs in a magnetic circuit of the motor 1. Further, referring to the graph of the simulation results, the d-axis current Id also changes an offset component of the d-axis inductance.

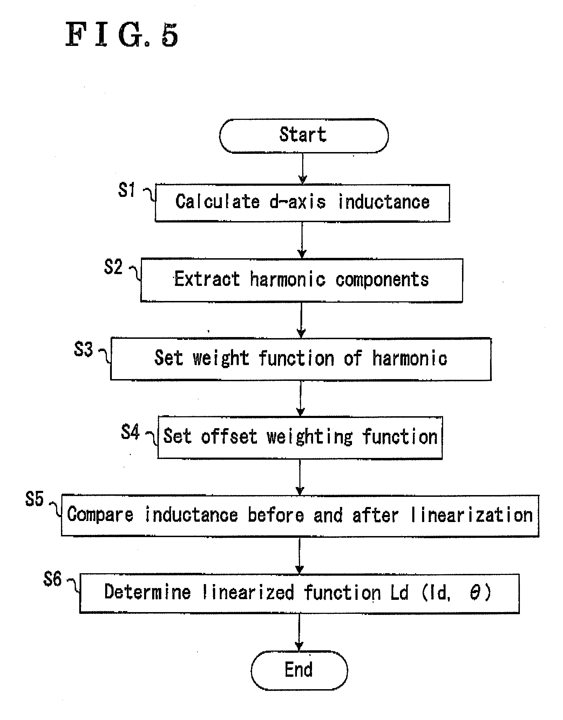

From the above examination results, it is found that the d-axis inductance having the nonlinear characteristics is linear-functionalized by approximating the periodicity relative to the electrical angle θ having the high order harmonic components, changes of degree of influence of a high-order harmonic and changes of the offset component. By the linearization of the d-axis inductance, the d-axis inductance function Ld (Id, θ) becomes usable in the voltage equation and the torque equations. As a result, the synchronous motor control device is optimized. An example of procedures for linearization of the d-axis inductance function Ld (Id, θ) is described below in accordance with a flowchart in Fig. 5.

Firstly, the d-axis inductance is calculated as a nonlinear three-dimensional map indicating a relationship with the d-axis current Id and the electrical angle θ by using the magnetic field simulator (S1: nonlinear inductance calculation process). The three-dimensional map corresponds to a three-dimensional graph of the simulation results illustrated in Fig. 4A. In practice, the calculation results of the magnetic field simulator is discrete, however, the graph in Fig. 4A is formed by connecting the discrete data.

Secondly, a harmonic component superimposed on the d-axis inductance is extracted from the d-inductance periodicity on the basis of the nonlinear three-dimensional map (S2: high order harmonic component extracting process). In this embodiment, as mentioned above, the third order harmonic and the sixth order harmonic are extracted. The third and sixth order harmonics are represented by Kdcos(3θ) and Kdcos(6θ) respectively where Kd is an amplitude coefficient. In addition to the extraction of the high order harmonics, the amplitude coefficient Kd is identified at the high order harmonic components extraction process. The amplitude coefficient Kd is also a function Kd (Id) of the d-axis current Id, and is represented by the following equation (equation 8).

$Kd ⋅ \left(Id\right) = \frac{1.1 \times {10}^{- 3}}{6} ⋅ Id - 1.6 ⋅ {10}^{- 2}$

Following the high order harmonic components extraction process, a weight function Wd (Id) is set by using the d-axis current Id that acts as a weighting coefficient of the high order harmonic components (S3: weight function setting process). In this embodiment, the weight function Wd (Id) indicating the degree of influence of the high-order harmonic is represented in the following equation (equation 9).

$Wd ⋅ \left(Id\right) = \frac{7.0 \times {10}^{- 3}}{6} ⋅ Id - 1.6 ⋅ {10}^{- 1}$

The weight function Wd (Id) complementarily acts on the third order harmonic and the sixth order harmonic. The weight function Wd (Id) of this embodiment acts as a multiplier coefficient relative to the third order harmonic. A value gained by subtracting the weight function Wd (Id) from one (1) (i.e., value = 1 - Wd(Id)) acts as a multiplier coefficient relative to the sixth order harmonic.

As mentioned above in accordance with Fig. 4A, the d-axis current Id also changes the offset component of the d-axis inductance. Therefore, an amplitude offset function Cd (Id) is set by using the d-axis current Id that acts as a weighting coefficient of an amplitude offset component of the d-axis inductance (S4: offset function setting process). The changes of the amplitude offset are expressed to be more accurate when a high-degree function is used. However, a calculation load of the synchronous motor control device is increased when the high-degree function is used. Hence, it may be preferable that a practical degree is selected. In this embodiment, the amplitude offset function Cd (Id) is approximated by means of a quadratic function. However, the amplitude offset function Cd (Id) may be approximated by using other functions of degree depending on an accuracy required for the motor control, a calculation capacity of the control device and the like. In this embodiment, the amplitude offset function Cd (Id) is approximated to an amplitude offset function Cd (Id) represented by the following equation (equation 10).

$Cd \left(Id\right) = - \frac{3.0 \times {10}^{- 4}}{6} ⋅ {Id}^{2} - \frac{1.3 \times {10}^{- 3}}{6} ⋅ Id + 1.4 \times {10}^{- 1}$

The linearized d-axis inductance function Ld (Id, θ) is represented by the following equation 11 gained on the basis of equations 8, 9 and 10.

$Ld \left(Id⁢θ\right) = Kd \left(Id\right) ⋅ \left[\left\{cos\left(3⁢θ\right)⋅Wd\left(Id\right)\right\}+{cos\left(6⁢θ\right)⋅( 1 - Wd \left(Id\right)}\right] + Cd \left(Id\right)$

Fig. 4B illustrates the linearized d-axis inductance function Ld (Id, θ) represented in equation 11 that is plotted to a three-dimensional graph. In order to evaluate equation 11, the nonlinear d-axis inductance illustrated in Fig. 4A and the linearized d-axis inductance illustrated in Fig. 4B are compared (S5: comparing process). When the nonlinear d-axis inductance and the linearized d-axis inductance correspond to each other positively within a practical range, equation 11 is determined as the d-axis inductance function Ld (Id, θ) (S6: inductance function determining process). As described above, following the inductance linearization process, the d-axis inductance function Ld (Id, θ) is set.

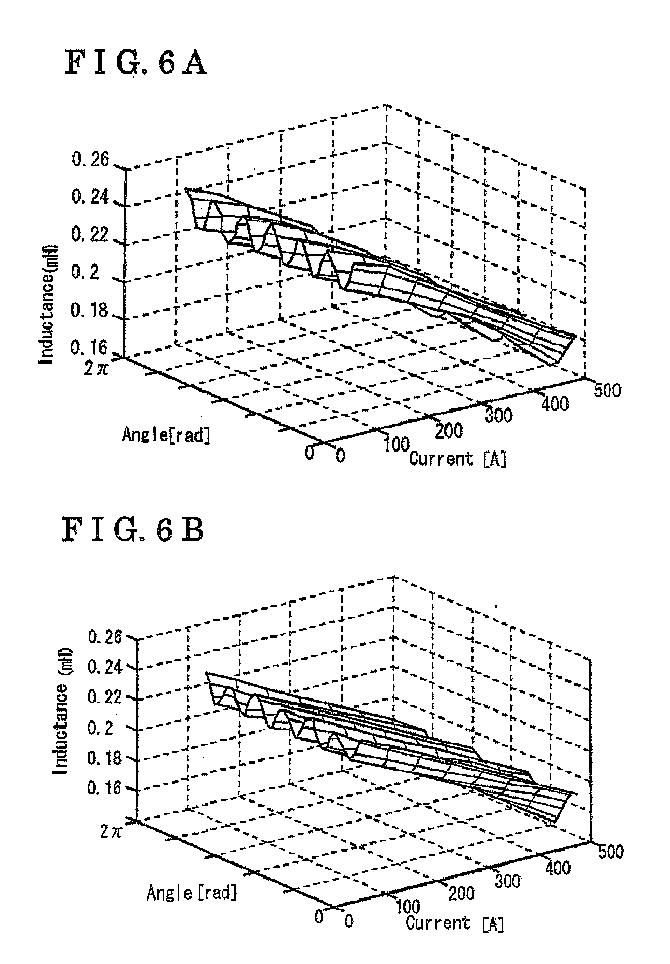

Fig. 6A is a three-dimensional graph illustrating simulated results of characteristics of the q-axis inductance Lq by using the magnetic field simulator. As is the case with the above-mentioned d-axis inductance, the q-axis inductance Lq also has nonlinear characteristics. Thus, the q-axis inductance also needs to be linearized so that the q-axis inductance function Lq (Iq, 9) becomes differentiable.

Referring to the graph of the simulation results, the q-axis inductance Lq is has a periodicity relative to the electrical angle θ, and further, the q-axis inductance Lq has a decreasing tendency relative to an increase of the q-axis current Iq. Further, when an amount of the q-axis current Iq is small, a periodicity relative to a sixth order harmonic of the electrical angle θ is found. When an amount of the q-axis current Iq is large, a periodicity relative to a third order harmonic of the electrical angle θ is found. In other words, the q-axis inductance Lq is a composition of the sixth order harmonic and the third order harmonic. Then, the q-axis current Iq acts as a weight function of the sixth order harmonic and the third order harmonic. As is the case with the d-axis inductance Ld, occurrence of the magnetic saturation phenomenon and the localized magnetic saturation phenomenon in response to an increase of the q-axis current Iq, and changes of offset component of the q-axis inductance in response to the increase of the q-axis current Iq are found.

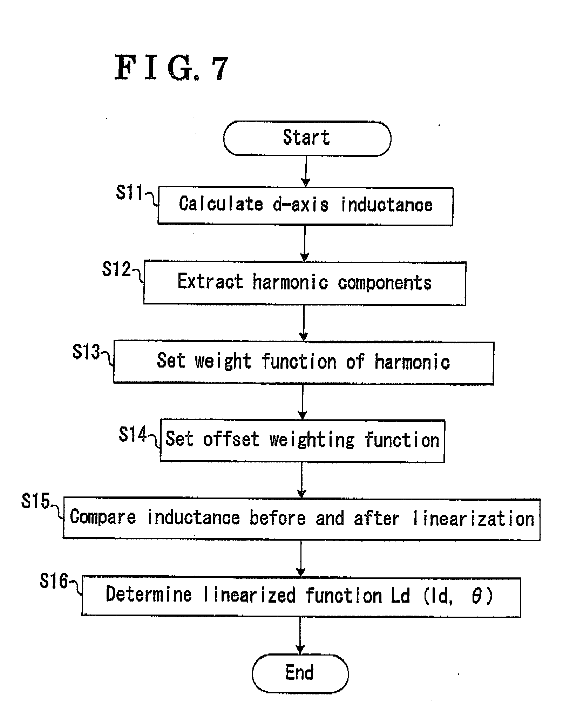

Therefore, as is the case with the d-axis inductance function Ld (Id, θ), the q-axis inductance Lq (Iq, θ) is also linearizable, More specifically, the q-axis inductance is linear-functionalized by approximating the periodicity relative to the electrical angle θ having the high order harmonic components, changes of degree of influence of a high-order harmonic and changes of the offset component. By the linearization of the q-axis inductance, the q-axis inductance function Lq (Iq, θ) becomes usable in the voltage equation and the torque equations. As a result, the synchronous motor control device is optimized. An example of procedures for linearization of the q-axis inductance function Lq (Iq, θ) is described below in accordance with a flowchart in Fig. 7.

Firstly, the q-axis inductance is calculated as a nonlinear three-dimensional map indicating a relationship with the q-axis current Iq and the electrical angle θ by using the magnetic field simulator (S11: nonlinear inductance calculation process). The three-dimensional map corresponds to a three-dimensional graph of the simulation results illustrated in Fig. 6A. In practice, the calculation results of the magnetic field simulator is discrete, however, the graph in Fig. 6A is formed by connecting the discrete data.

Secondly, high order harmonic components superimposed on the q-axis inductance are extracted from the q-inductance periodicity on the basis of the nonlinear three-dimensional map (S12: high order harmonic components extracting process). In this embodiment, as mentioned above, the third order harmonic and the sixth order harmonic are extracted. The third and sixth order harmonics are represented by Kqcos(3θ) and Kqcos(6θ) respectively where Kq is an amplitude coefficient. In addition to the extraction of the high order harmonics, the amplitude coefficient Kq is identified at the high order harmonic components extraction process. The amplitude coefficient Kq is also a function Kq (Iq) of the q-axis current Iq, and is represented by the following equation (equation 12).

$Kq ⋅ \left(Iq\right) = \frac{2.0 \times {10}^{- 4}}{6} ⋅ Iq - 1.0 \times {10}^{- 2}$

Following the high order harmonic components extraction process, a weight function Wq (Iq) is set by using the q-axis current Iq that acts as a weighting coefficient of the high order harmonic components (S13: weight function setting process). In this embodiment, the weight function Wq (Iq) is represented in the following equation (equation 13).

$Wq ⋅ \left(Iq\right) = \frac{1.4 \times {10}^{- 1}}{6} ⋅ Iq$

The weight function Wq (Iq) complementarily acts on the third order harmonic and the sixth order harmonic. The weight function Wq (Iq) of this embodiment acts as a multiplier coefficient relative to the third order harmonic. A value gained by subtracting the weight function Wq (Iq) from one (1) (i.e., value = 1 - Wq(Iq)) acts as a multiplier coefficient relative to the sixth order harmonic.

As mentioned above, the q-axis current Iq also changes the offset component of the q-axis inductance. Therefore, an amplitude offset function Cq (Iq) is set by using the q-axis current Iq that acts as a weighting coefficient of an amplitude offset component of the q-axis inductance (S14: offset function setting process). As is the case with the d-axis inductance, the changes of the amplitude offset is expressed to be more accurate by approximating the amplitude offset function Cq (Iq) when a high-degree function is used. However, in this embodiment, the amplitude offset function Cq (Iq) is approximated by a linear function that is a practical function of degree. However, the amplitude offset function Cq (Iq) may be approximated by using other functions of degree depending on an accuracy required for the motor control, a calculation capacity of the control device and the like. In this embodiment, the amplitude offset function Cq (Iq) is approximated to an amplitude offset function Cq (Iq) represented by the following equation (equation 14).

$Cq \left(Iq\right) = - \frac{1.1 \times {10}^{- 2}}{6} ⋅ Iq + 2.5 \times {10}^{- 1}$

The linearized q-axis inductance function Lq (Iq, θ) is represented by the following equation (equation 15) gained on the basis of equations 12, 13 and 14.

$Lq \left(Iq⁢θ\right) = Kq \left(Iq\right) ⋅ \left[\left\{cos\left(3⁢θ\right)⋅Wq\left(Iq\right)\right\}+{cos\left(6⁢θ\right)⋅( 1 - Wq \left(Iq\right)}\right] + Cq \left(Iq\right)$

Fig. 6B illustrates the linearized q-axis inductance function Lq (Iq, θ) represented by equation 15 that is plotted to a three-dimensional graph. In order to evaluate equation 15, the nonlinear q-axis inductance illustrated in Fig. 6A and the linearized q-axis inductance illustrated in Fig. 6B are compared (S15: comparing process). When the nonlinear q-axis inductance and the linearized q-axis inductance correspond to each other positively within the practical range, equation 15 is determined as the q-axis inductance function Lq (Iq, θ) (S16: inductance function determining process). As above, following the inductance linearization process, the q-axis inductance function Lq (Iq, θ) is set.

As mentioned above, each of the d-axis inductance and the q-axis inductance is positively functionalized by determining the degree and amplitude pf a periodic function relative to the electrical angle θ including the high frequency component, by determining the degree of influence of the high-order harmonic component relative to the current, and by determining changes of the offset component relative to the current.

As described above, by linearly functionalizing the d-axis inductance and the q-axis inductance, the voltage equation is optimized. However, the three-phase interlinkage magnetic flux waves have distortion, and it is expected that disturbance is included in the voltage command because of the distortion. Hence, by preliminarily incorporating the disturbance into the voltage equation, the influence of the disturbance relative to the voltage command is prevented. When voltage equation 7 is rewritten by using the linearized inductance function, and then by incorporating a disturbance voltage estimating term where ΔVd indicates a d-axis disturbance voltage and ΔVq indicates a q-axis disturbance voltage into the voltage equation, the voltage equation is transformed into the following equation (equation 16).

$\left[\begin{matrix}Vd \\ Vq\end{matrix}\right] = \left[\begin{matrix}Ra + pLd \left(Id⁢θ\right) & - ω ⁢ Lq ( Iq , θ ) \\ ω ⁢ Ld ( Id , θ ) & Ra + pLq ( Iq , θ )\end{matrix}\right] [ \begin{matrix}Id \\ Iq\end{matrix} ] + [ \begin{matrix}0 \\ ω ⁢ ψ ⁢ a\end{matrix} ] + [ \begin{matrix}Δ ⁢ Vd \\ Δ ⁢ Vq\end{matrix} ]$

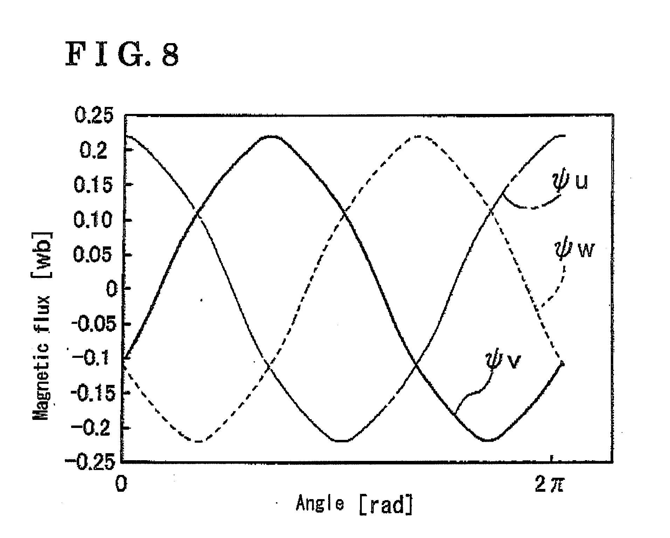

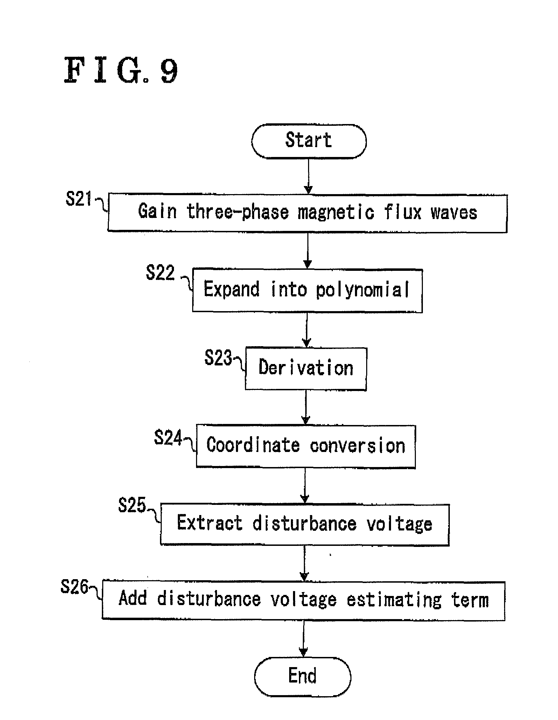

Fig. 8 is a waveform chart illustrating three-phase interlinkage magnetic flux waves ψu, ψv and ψw in a case where the motor 1 is driven without any loads applied thereto. Fig. 9 is a flowchart illustrating an example of procedures for adding the disturbance estimating term to the voltage equation. As illustrated in Fig. 8, each of the three-phase interlinkage magnetic flux waves ψu, ψv and ψw has the distortion that causes the disturbance voltage. A procedure for optimizing the voltage equation by estimating the d-axis disturbance voltage ΔVd and the q-axis disturbance voltage ΔVq, and then by adding the disturbance estimating term to the voltage equation (disturbance voltage estimating process) is described below in accordance with Fig. 9.

Firstly, the three-phase interlinkage magnetic flux waves ψu, ψv and ψw generated when the motor 1 is driven without any loads applied thereto are obtained (S21: magnetic flux wave obtaining process). The three-phase interlinkage magnetic flux waves ψu, ψv and ψw may be actually measured or may be obtained by calculation with using the magnetic field simulator. In this embodiment, as is the case with the above-mentioned inductance, the calculation results of the magnetic field simulator are obtained as the three-phase interlinkage magnetic flux waves ψu, ψv and ψw.

Secondly, as indicated in the following equations (equations 17, 18 and 19), each of the three-phase interlinkage magnetic flux waves ψu, ψv and ψw is expanded in series into a polynomial where a trigonometric function is employed (S22: expansion process). By expanding the three-phase interlinkage magnetic flux waves ψu, ψv and ψw into the polynomials, the high order harmonic components become easily separable. Conventionally, it is known that odd-high order harmonics are more influential, thus, the odd-high order harmonics are extracted in this embodiment.

$ψu = {A}_{1} ⁢ cos \left(θ\right) + {A}_{2} ⁢ cos \left(3⁢θ\right) + {A}_{3} ⁢ cos \left(5⁢θ\right) + {A}_{4} ⁢ cos \left(7⁢θ\right)$ $ψv = {B}_{1} ⁢ cos \left(θ-\frac{2}{3}⁢π\right) + {B}_{2} ⁢ cos \left(3⁢θ-\frac{2}{3}⁢π\right) + {B}_{3} ⁢ cos \left(5⁢θ-\frac{2}{3}⁢π\right) + {B}_{4} ⁢ cos \left(7⁢θ-\frac{2}{3}⁢π\right)$ $ψw = {C}_{1} ⁢ cos \left(θ+\frac{2}{3}⁢π\right) + {C}_{2} ⁢ cos \left(3⁢θ+\frac{2}{3}⁢π\right) + {C}_{3} ⁢ cos \left(5⁢θ+\frac{2}{3}⁢π\right) + {C}_{4} ⁢ cos \left(7⁢θ+\frac{2}{3}⁢π\right)$

In above equations 17, 18 and 19, An, Bn and Cn (n=1, 2, 3, 4) are coefficients indicating amplitude components, and each of An, Bn and Cn has a value represented in the following equation (equation 20).

$\left[A⁢B⁢C\right] = \left[\begin{matrix}{A}_{1} & {B}_{1} & {C}_{1} \\ {A}_{2} & {B}_{2} & {C}_{2} \\ {A}_{3} & {B}_{3} & {C}_{3} \\ {A}_{4} & {B}_{4} & {C}_{3}\end{matrix}\right] = [ \begin{matrix}2.13 \times {10}^{- 1} & 2.13 \times {10}^{- 1} & 2.13 \times {10}^{- 1} \\ - 1.18 \times {10}^{- 4} & 6.14 \times {10}^{- 5} & 2.94 \times {10}^{- 5} \\ 5.94 \times {10}^{- 3} & 5.97 \times {10}^{- 3} & 5.99 \times {10}^{- 3} \\ 1.51 \times {10}^{- 3} & 1.49 \times {10}^{- 3} & 1.47 \times {10}^{- 3}\end{matrix} ]$

The voltage is gained by differentiating the interlinkage magnetic flux. Hence, each of equations 17, 18 and 19 is differentiated and transformed into a polynomial of each of the three-phase voltage waves represented by each of the following equations (equations 21, 22 and 23) (S23: differentiation process).

$eu = {A}_{1} ⁢ sin \left(θ\right) + {3 ⁢ A}_{2} ⁢ sin \left(3⁢θ\right) + {5 ⁢ A}_{3} ⁢ sin \left(5⁢θ\right) + {7 ⁢ A}_{4} ⁢ sin \left(7⁢θ\right)$ $ev = - {B}_{1} ⁢ sin \left(θ-\frac{2}{3}⁢π\right) + 3 ⁢ {B}_{2} ⁢ sin \left(3⁢θ-\frac{2}{3}⁢π\right) - 5 ⁢ {B}_{3} ⁢ sin \left(5⁢θ-\frac{2}{3}⁢π\right) - 7 ⁢ {B}_{4} ⁢ sin \left(7⁢θ-\frac{2}{3}⁢π\right)$ $ew = - {C}_{1} ⁢ sin \left(θ+\frac{2}{3}⁢π\right) - 3 ⁢ {C}_{2} ⁢ sin \left(3⁢θ+\frac{2}{3}⁢π\right) - 5 ⁢ {C}_{3} ⁢ sin \left(5⁢θ+\frac{2}{3}⁢π\right) - 7 ⁢ {C}_{4} ⁢ sin \left(7⁢θ+\frac{2}{3}⁢π\right)$

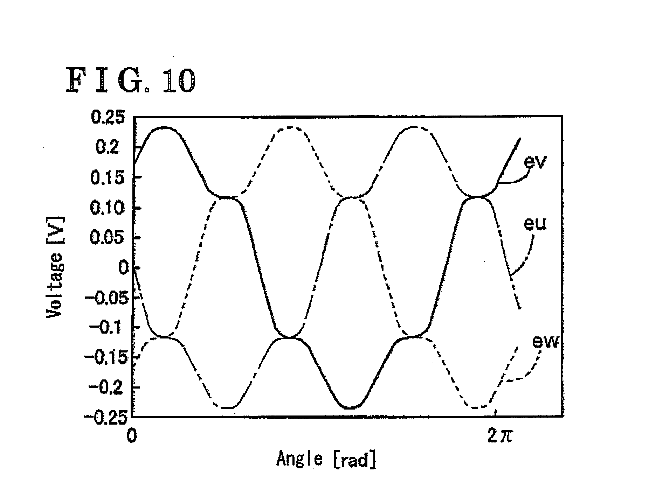

Fig. 10 is a waveform chart illustrating three-phase voltage waves eu, ev and ew gained by differentiating the three-phase interlinkage magnetic flux waves ψu, ψv and ψw, respectively. As is apparent from the waveform chart in Fig. 10, the distortion of the interlinkage magnetic flux appears on each of the voltage waves eu, ev and ew as a larger distortion.

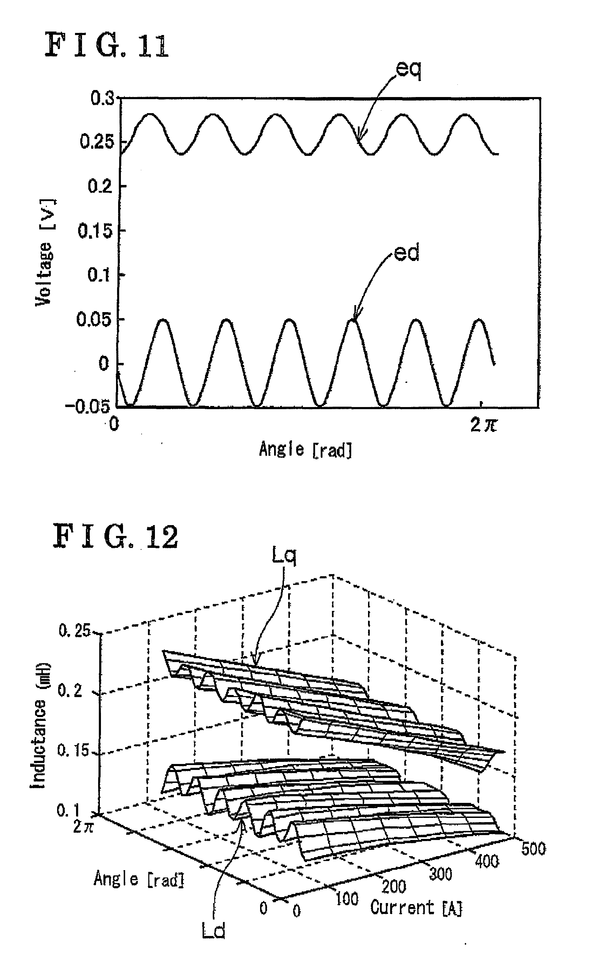

Following the differentiation process, the polynomials of the voltage waves eu, ev and ew represented in equations 21, 22 and 23 respectively is transformed into polynomials indicating the d-axis voltage Vd and the q-axis voltage Vq (S24: coordinate transformation process). Fig. 11 is a waveform chart illustrating a voltage wave ed of the d-axis and a voltage wave eq of the q-axis both of which are obtained by transforming the three-phase voltage waves into the d-axis and q-axis coordinates. The distortions of the interlinkage magnetic flux waves appear distinctly on the d-axis voltage wave ed and the q-axis voltage wave eq as pulsation.

The following equations (equations 24 and 25) are obtained by substituting coefficients in equation 20 into the polynomials indicating the coordinate-transformed d-axis voltage wave ed and q-axis voltage wave eq, respectively. At least one or more terms that indicate relatively large values among terms of each of polynomials of the coordinate-transformed d-axis voltage wave ed and q-axis voltage wave eq represented in the following equations (equations 24 and 25) respectively are extracted as each of the d-axis disturbance voltage ΔVd and the q-axis disturbance voltage ΔVq (S25: extraction process). In this embodiment, the coefficient of the sixth order harmonic is far larger than coefficients of other terms. Hence, one term, i.e. the term of the sixth order harmonic in each of polynomials, is extracted as a term indicating each of the disturbance voltage ΔVd and ΔVq.

$ed = 2.07 \times {10}^{- 5} ⋅ sin \left(2⁢θ\right) + 2.82 \times {10}^{- 5} ⋅ sin \left(4⁢θ\right) - 4.93 \times {10}^{- 2} ⋅ sin \left(6⁢θ\right) - 8.73 \times {10}^{- 5} ⋅ sin \left(8⁢θ\right)$ $\begin{matrix}eq = 2.61 \times {10}^{- 1} + 7.07 \times {10}^{- 6} ⋅ sin \left(2⁢θ\right) - 8.16 \times {10}^{- 6} ⋅ sin \left(4⁢θ\right) + 5.77 \times {10}^{- 5} ⋅ sin \left(8⁢θ\right) - 4.52 \times {10}^{- 5} ⋅ cos \left(2⁢θ\right) + 1.18 \times {10}^{- 4} ⋅ cos \left(4⁢θ\right) - 2.38 \times {10}^{- 2} ⋅ cos \left(6⁢θ\right) - 8.73 \times {10}^{- 5} ⋅ cos \left(8⁢θ\right) \\ = 2.61 \times {10}^{- 4} - 2.83 \times {10}^{- 2} ⋅ cos \left(6⁢θ\right) = ψa + Δ ⁢ Vq - 4.52 \times {10}^{- 5} ⋅ cos \left(2⁢θ\right) + 1.18 \times {10}^{- 4} ⋅ cos \left(4⁢θ\right) + 2.38 \times {10}^{- 2} ⋅ cos \left(6⁢θ\right) - 8.73 \times {10}^{- 5} ⋅ cos \left(8⁢θ\right) = 2.61 \times {10}^{- 1} - 2.38 \times {10}^{- 2} ⋅ cos \left(6⁢θ\right) = ψa + ΔVq\end{matrix}$

On the basis of the extraction results, the disturbance voltage estimating terms indicating the disturbance voltages ΔVd and ΔVq respectively are added to the voltage equation (S26: disturbance term adding process). By doing so, the voltage equation is optimized as indicated in the following equation (equation 26).

$\left[\begin{matrix}Vd \\ Vq\end{matrix}\right] = \left[\begin{matrix}Ra + pLd \left(Id⁢θ\right) & - ω ⁢ Lq ( Iq , θ ) \\ ω ⁢ Ld ( Id , θ ) & Ra + pLq ( Iq , θ )\end{matrix}\right] [ \begin{matrix}Id \\ Iq\end{matrix} ] + [ \begin{matrix}0 \\ 2.61 \times {10}^{- 1}\end{matrix} ] ω + [ \begin{matrix}- 4.93 \times {10}^{- 2} ⋅ sin \left(6⁢θ\right) \\ - 2.38 \times {10}^{- 2} ⋅ cos \left(6⁢θ\right)\end{matrix} ]$

In voltage equation 26, the disturbances are identified relative to a d-axis voltage vector and a q-axis voltage vector, respectively. The voltage command calculation portion 5 calculates the d-axis voltage command Vdr and the q-axis voltage command Vqr on the basis of voltage equation 26. As a result, accurate motor control is achieved. Referring to equation 26, the d-axis disturbance voltage ΔVd and the q-axis disturbance voltage ΔVq influence on a value of the interlinkage magnetic flux ψa (in this embodiment, 2.61×10⁻¹) by 10 to 20 percent. Hence, the d-axis disturbance voltage ΔVd and the q-axis disturbance voltage ΔVq are unignorable. As the d-axis disturbance voltage ΔVd and the q-axis disturbance voltage ΔVq are the both sixth order harmonic, elimination of the d-axis disturbance voltage ΔVd and the q-axis disturbance voltage ΔVq is difficult.

For example, a rotor having permanent magnets including seven paring poles (i.e. 14 poles) is supposed to rotate at 6000rpm (100Hz). As a frequency of each of the disturbance voltages ΔVd and ΔVq is proportional to a number of the paring poles, and further, is the sixth order harmonic, the frequency of the disturbance voltage is calculated as 4.2kHz (=100*Hz* × 7 *paring poles* x *6 harmonic* ). A frequency eliminable by a pulse width modulation control (hereinafter referred to as a PWM control) is about one tenth of the carrier frequency for modulation. Supposing that the carrier frequency is about 10k to 20kHz, an upper limit of the frequency of each of the disturbance voltages ΔVd and ΔVq treatable by the PWM control is about 1k to 2 kHz. Therefore, when the motor 1 is in a normal operational area equal to or larger than 3000rpm, it is difficult to prevent the disturbance by the feedback control using the PWM. However, by using voltage equation 26, a feed-forward control is executed by preliminarily estimating the d-axis disturbance voltage ΔVd and the q-axis disturbance voltage ΔVq. As a result, the disturbance voltages ΔVd and ΔVq are appropriately suppressed and an accurate motor control becomes achievable.

The case where the linearized d-axis inductance function Ld (Id, θ) and the q-axis inductance function Lq (Iq, θ) are adapted to the voltage equation is described above. However, as represented in equations 2 and 6, the d-axis inductance Ld and the q-axis inductance Lq are also used in the torque equations. Therefore, it may be preferable that the linearized d-axis inductance function Ld (Id, θ) and the q-axis inductance function Lq (Iq, θ) are also incorporated into the torque equations. By setting the d-axis inductance Ld as the function of the d-axis current Id and the electrical angle θ and by setting the q-axis inductance Lq as the function of the q-axis current Iq and the electrical angle θ, a torque ripple becomes estimable by using the torque equations. For example, as illustrated in Fig. 1, the synchronous motor control device may be provided with a torque ripple estimating portion 9 that estimates the torque ripple and feed-forwards the estimation results to the current command calculation portion 4. Additionally, the torque ripple estimated by the torque ripple estimating portion 9 may be feed-forwarded to the voltage command calculation portion 5.

A feed-forward process may be executed by incorporating the torque ripple into the process for calculating the d-axis current command Idr and the q-axis current command Iqr from the torque command Tr at the current command calculation portion 4, without additionally providing the torque ripple estimating portion 9. Alternatively, the feed-forward process may be achieved by calculating the d-axis current command Idr and the q-axis current command Iqr without incorporating the torque ripple, and then by calculating a difference between the calculated d-axis and q-axis current commands Idr, Iqr and the di-axis and q-axis current commands Idr, Iqr that are obtained from the torque command Tr with incorporating the torque ripple.

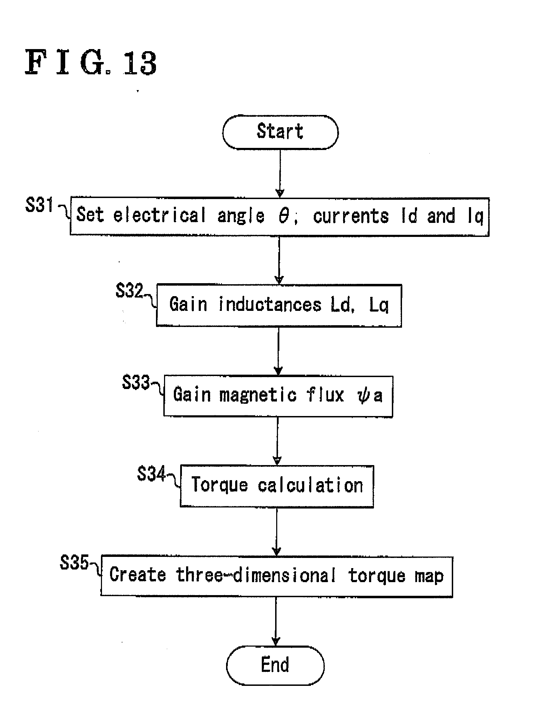

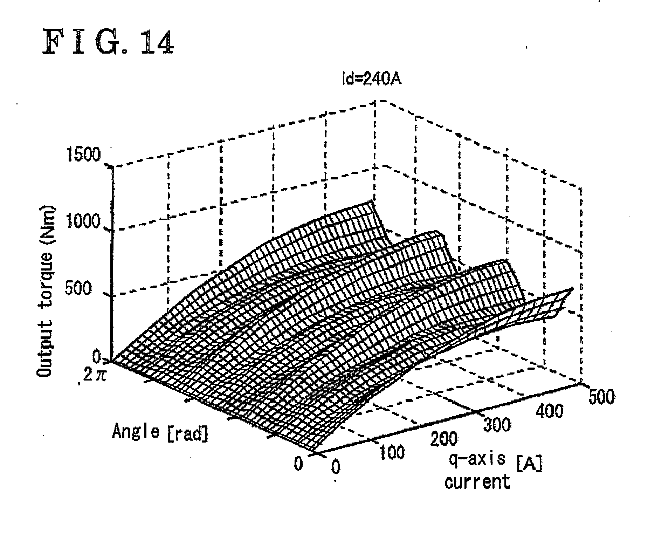

Fig. 12 is a graph illustrating characteristics of the linearized d-axis inductance and q-axis inductance. Fig. 13 is a flowchart illustrating an example of procedures for estimating the torque ripple. Fig. 14 is a graph illustrating an example of the torque characteristics having the torque ripple.

As illustrated in Fig. 13, firstly, the electrical angle θ, the d-axis and q-axis current Id and Iq are set (S31), and then, the d-axis and q-axis inductances Ld and Lq are gained (S32). It may be preferable if the d-axis and q-axis inductances Ld and Lq are plotted to maps by using the inductance functions linearized in the above-mentioned manner as illustrated in, for example, Fig. 13. By referring to the map, the d-axis and q-axis inductances Ld and Lq are easily gained in the process of torque calculation. Then, the interlinkage magnetic flux ψa is obtained (S33). A direct-current component in above-mentioned equation 25 is also usable for calculating the value of the interlinkage magnetic flux ψa.

By substituting the d-axis and q-axis currents Id and Iq, the d-axis and q-axis inductances Ld and Lq, and the interlinkage magnetic field ψa into equation 6, a torque corresponding to the number of paring poles Pn is calculated (S34). Then, a three-dimensional torque map illustrated in Fig. 14 is created (S35). Fig. 14 shows characteristics of a torque T that varies in response to the q-axis current Iq and the electrical angle θ when the d-axis current Id is 240A. The torque ripple is appropriately controlled by the feed-forward control when the torque map illustrated in Fig. 14 is provided for each of plural values of the d-axis current Id.

As described above, the vector-control is optimized so as to appropriately follow the changes of the inductance of the synchronous motor that is vector-controlled. Further, the synchronous motor control device that is optimized by the optimizing method is achieved.

Additionally, in the above-mentioned embodiment, the case where the influence of the sixth order harmonic is large is described, however, order of the harmonics may vary depending on motor design such as motor structure. However, as' is evident from the above-mentioned embodiment, the order of the harmonic that has a large influence is identified by comparing the function of each of the terms in the polynomial with each other in a process of optimization. Thus, by employing the synchronous motor device of the above-mentioned embodiment, the voltage equations and torque equations appropriately corresponding to each variety of motor are gained, and further, the synchronous motor control device appropriately controlled is achieved.

Further, the numerical values used in the above-mentioned equations are obtained from the simulation results for describing an example of the synchronous motor control device and method for optimizing the synchronous motor control, and the numerical values are not universal. The numerical values used in the above-mentioned equations are modified to appropriate values so as to correspond each variety of motor.

The synchronous motor device optimized by adapting the synchronous motor optimizing method suppresses the torque fluctuation and the torque ripple basically by the feed-forward control. Suppressing the torque ripple, the disturbances and the like, including the harmonic components, is difficult, or even if it is possible, additional functions need to be provided at the synchronous motor device. For example, in order to suppress the torque ripple and the disturbances including the harmonic components, the carrier frequency of the PWM needs to be increased. However, in addition to cost increase in response to use of higher frequencies, cost increase in response to additional measures such as a measure for radiated noise generated due to use of higher frequencies may be needed. On the other hand, in the synchronous motor control device according to the above-mentioned embodiment, such cost increase is less likely to occur.

Accordingly, the d-axis inductance Ld and the q-axis inductance Lq used in the torque equation for calculating the reluctance torque are set as the function of the d-axis current Id and the electrical angle θ and the function of the q-axis current Iq and the electrical angle θ, respectively. Then, the torque ripple estimating portion 9 estimates the torque ripple caused by the changes of the d-axis and q-axis inductances. Thus, the synchronous motor control device that appropriately follows changes in the inductance of the synchronous motor that is vector-controlled and suppresses the torque ripple is achieved.

According to the embodiment, the d-axis inductance Ld)and the q-axis inductance Lq in the voltage equation are set as the function of the d-axis current Id and the electrical angle θ and the function of the q-axis current Iq and the electrical angle θ, respectively

Accordingly, the inductances included to the impedance components of the stator coils 1u, 1v and 1w are set as the functions of the current and the electrical angle θ, respectively. An error in each of the impedances influences on the d-axis and q-axis voltage commands Vdr and Vqr calculated on the basis of the voltage equation and further, becomes a cause of the torque fluctuation and the torque ripple. However, by setting the d-axis and q-axis inductances Ld and Lq as the functions respectively, the errors in the d-axis and q-axis inductances Ld and Lq are prevented and further, the error in each of the impedances including the d-axis and q-axis inductances Ld and Lq is prevented. As a result, an error in the d-axis voltage command Vdr and the q-axis voltage command Vqr is prevented. Therefore, the synchronous motor control device that appropriately follows the changes in the d-axis and q-axis inductances Ld and Lq of the synchronous motor that is vector-controlled and further, that suppresses the torque fluctuation and the torque ripple, is achieved.

According to the embodiment, the voltage command calculation portion 5 calculates the d-axis voltage command Vdr and the q-axis voltage command Vqr on the basis of the voltage equation to which a disturbance voltage estimating term, which indicates disturbance voltages relative to the d-axis current Id and the q-axis current Iq estimated by identifying high-order coefficients of harmonic components included into three-phase interlinkage magnetic flux waves ψu, ψv and ψw, is added.

Accordingly, the three-phase interlinkage magnetic flux waves include the high-degree harmonics other than fundamental harmonics. The high-degree harmonics become a cause for generating the disturbance voltages ΔVd and ΔVq in the voltage equations. Specifically, because conductive velocity of the high-degree harmonics is faster than a control speed of the feedback control, it is difficult to eliminate the high-degree harmonics by the feedback control. Therefore, it is difficult to prevent the disturbance voltages ΔVd and ΔVq with the feedback control. According to the embodiment, the disturbance voltages ΔVd and ΔVq generated at the synchronous motor are accurately estimated by identifying the high-order coefficient of the high-degree harmonic components. Then, the disturbance estimating terms representing the estimated disturbance voltages ΔVd and ΔVq are added to the voltage equations, respectively. Thus, without relying on the feedback control, the preliminarily accurately estimated disturbance voltages ΔVd and ΔVq are incorporated in the calculation of the control voltages of the synchronous motor. As a result, the synchronous motor control device that suppresses the torque fluctuation, the torque ripple and the like is achieved.

Accordingly, the d-axis and q-axis inductances Ld and Lq used for calculating the reluctance torque in the torque equation are set as the function of the d-axis current Id and the electrical angle θ and the function of the q-axis current Iq and the electrical angle θ, respectively. This allows the synchronous motor control device to feed-forward in the vector-control by estimating the torque ripple caused by the fluctuations of the d-axis and q-axis inductances Ld and Lq. Further, the d-axis and q-axis inductances included in each of the impedances of the stator coils 1u, 1v and 1w are set as the functions between the current and the electrical angle θ. By setting the d-axis and q-axis inductances Ld and Lq as the functions, the errors in the d-axis and q-axis inductances are prevented and further, the error in the each of impedances including the d-axis and q-axis inductances is prevented. As a result, the error in the d-axis and q-axis voltage commands Vdr and Vqr calculated by using the voltage equation is prevented. Hence, the vector-control of the synchronous motor is optimized so as to appropriately follow the fluctuation of the d-axis and q-axis inductances Ld and Lq and so as to suppress the torque fluctuation and the torque ripple.

According to the embodiment, the inductance linearization process includes the nonlinear inductance calculation process for calculating the d-axis inductance Ld and the q-axis inductance Lq as the nonlinear three-dimensional map indicating the relationship with the d-axis current Id and the electrical angle θ and the nonlinear three-dimensional map of the q-axis current Iq and the electrical angle θ, respectively, the harmonic component extracting process for extracting the harmonic components superimposed on the d-axis inductance Ld and the q-axis inductance Lq on the basis of the nonlinear three-dimensional maps, respectively, the weight function setting process for setting weight functions by using the d-axis current Id and the q-axis current Iq respectively that act as the weighting coefficients of the harmonic components, and the offset function setting process for setting amplitude offset functions by using d-axis current Id and the q-axis current Iq that act as the weighting coefficients of amplitude offset components of the d-axis inductance Ld and the q-axis inductance Lq, respectively

The d-axis and q-axis inductances Ld and Lq are nonlinear and are three-dimensionally changed in response to the relationship between the d-axis and q-axis currents and the electrical angle θ, respectively. According to the embodiment, the d-axis and q-axis inductances Ld and Lq are calculated as the three-dimensional maps, respectively. Then, the fluctuation components of the d-axis and q-axis inductances Ld and Lq are characterized on the basis of the three-dimensional maps, respectively. As a result, the d-axis and q-axis inductances Ld and Lq are linearized as the d-axis inductance function Ld (Id, 9) and the q-axis inductance function Lq (Iq, θ), respectively. Specifically, because the voltage equation includes differentiation elements, the d-axis and q-axis inductances Ld and Lq becoming differentiable by the linearization is of importance. By the linearization of the d-axis and q-axis inductances Ld and Lq, the vector-control of the synchronous motor using the voltage equation is optimized so as to appropriately follow the fluctuations of the d-axis and q-axis inductances Ld and Lq.

According to the embodiment, the method for optimizing the synchronous motor control further includes the disturbance estimating process for optimizing the voltage equation by adding the disturbance voltage estimating term indicating estimated disturbances relative to the d-axis voltage Vd and the q-axis voltage Vq calculated by the voltage equation.

Accordingly, the three-phase interlinkage magnetic flux waves include the high-degree harmonics other than the fundamental harmonics. The high-degree harmonics become a cause for generating the disturbance voltages ΔVd and ΔVq in the voltage equations. Therefore, by identifying the high-order coefficient of the high-degree harmonic components, the disturbance voltages ΔVd and ΔVq generated at the synchronous motor are accurately estimated. According to the above-mentioned embodiment, the voltage equation is optimized by adding the disturbance estimating term indicating the estimated disturbance voltages ΔVd and ΔVq to the voltage equations, respectively. Therefore, the vector-control is optimized by incorporating the preliminarily accurately estimated disturbance voltages ΔVd and ΔVq in the calculation of the control voltages of the synchronous motor.

According to the embodiment, the disturbance estimating process includes the magnetic flux wave obtaining process for obtaining interlinkage magnetic flux waves ψu, ψv and ψW when the synchronous motor 1 is driven without any loads applied thereto, the expansion process for expanding each of the interlinkage magnetic flux waves ψu, ψv and ψw in series into the polynomial where a trigonometric function is used, the differentiation process for differentiating the polynomials of the interlinkage magnetic flux waves ψu, ψv and ψw and then converting the differentiated polynomials of the interlinkage magnetic flux waves ψu, ψv and ψw into the polynomials of the voltage waves eu, ev and ew, respectively, the coordinate transformation process for coordinate converting the polynomials of the voltage waves eu, ev and eq into polynomials indicating the d-axis voltage wave ed and the q-axis voltage wave eq, the extraction process for extracting one or more terms indicating relatively large values among the terms of each of the polynomials indicating the d-axis voltage wave ed and the q-axis voltage wave eq respectively as each of the d-axis disturbance voltage ΔVd and the q-axis disturbance ΔVq, and the disturbance term adding process for adding the disturbance voltage estimating term indicating the d-axis disturbance voltage ΔVd and the q-axis disturbance ΔVq to the voltage equation on the basis of the extraction results.

Accordingly, the high-degree harmonics other than the fundamental harmonics, more specifically the harmonic components that has a great influence on the disturbance voltages ΔVd and ΔVq, are included in the three-phase interlinkage magnetic flux waves. By expanding the interlinkage magnetic flux waves into the polynomials with the trigonometric functions, the harmonic components having the great influence may be identify in response to magnitude of the coefficient in the polynomial. The voltage is obtained by differentiating each of the interlinkage magnetic fluxes, and each of the three-phase voltage waves eu, ev and ew is represented in a vector-converted state where each of the three-phase voltage waves eu, ev and ew is converted into the d-axis and q-axis in the voltage equation. Hence, in this embodiment, the high-order harmonic components of the disturbance voltages ΔVd and ΔVq are identified in response to a coefficient in a vector-converted polynomial. Then, the estimated disturbance voltages ΔVd and ΔVq are added to the voltage equations as the disturbance voltage estimating terms that indicate the disturbance voltages ΔVd and ΔVq, respectively. As a result, the vector-control is optimized so as to incorporate the accurately estimated disturbance voltages ΔVd and ΔVq in the calculation of the control voltages of the synchronous motor.

According to the embodiment, the synchronous motor control device is optimized by the method for optimizing the synchronous motor control for coordinate converting the motor currents iu, iv and iw applied to respective three phases U-phase, V-phase and W-phase of a synchronous motor 1 into the d-axis, corresponding to the direction of the magnetic field generated by permanent magnets arranged at the rotor of the synchronous motor 1, and the q-axis orthogonal to the d-axis, by the method for optimizing the vector-control of the synchronous motor 1 based on the torque equation, using the interlinkage magnetic flux, formed by the magnetic field, the d-axis inductance Ld, a q-axis inductance Lq, the d-axis current Id and the q-axis current iq, and the voltage equation using the interlinkage magnetic flux ,formed by the magnetic field, the impedances, including the d-axis inductance Ld and the q-axis inductance Lq, of stator coils 1u, 1v and 1w of the synchronous motor 1, and by the method for setting the d-axis inductance Ld and the q-axis inductance Lq in the torque equation and the voltage equation as the function of the d-axis current Id and an electrical angle θ and a function of the q-axis current Iq and the electrical angle θ, respectively.

According to the embodiment, the synchronous motor control device is optimized by the nonlinear inductance calculation process for calculating the d-axis inductance Ld and the q-axis inductance Lq as the nonlinear three-dimensional map indicating the relation ship with the d-axis current Id and the electrical angle θ and the nonlinear three-dimensional map indicating the relationship with the q-axis current Iq and the electrical angle θ, respectively, the harmonic component extracting process for extracting the harmonic components superimposed on the d-axis inductance Ld and the q-axis inductance Lq on the basis of the nonlinear three-dimensional maps, respectively, the weight function setting process for setting the weight functions by using the d-axis current Id and the q-axis current Iq respectively that act as the weighting coefficients of the harmonic components, and by the offset function setting process for setting the amplitude offset functions by using d-axis current Id and the q-axis current Iq that act as the weighting coefficients of the amplitude offset components of the d-axis inductance Ld and the q-axis inductance Lq, respectively.

According to the embodiment, the synchronous motor control device is further optimized by optimizing the voltage equation by adding the disturbance voltage estimating term indicating estimated disturbances relative to the d-axis voltage Vd and the q-axis voltage Vq calculated by the voltage equation.

According to the embodiment, the synchronous motor control device is further optimized by the magnetic flux wave obtaining process for obtaining the interlinkage magnetic flux waves ψu, ψv and ψw when the synchronous motor 1 is driven without any loads applied thereto, the expansion process for expanding each of the interlinkage magnetic flux waves ψu, ψv and ψw in series into the polynomial where the trigonometric function is used, the differentiation process for differentiating the polynomials of the interlinkage magnetic flux waves ψu, ψv and ψw and then converting the differentiated polynomials of the interlinkage magnetic flux waves ψu, ψv and ψw into polynomials of the voltage waves eu, ev and ew, respectively, the coordinate transformation process for coordinate converting the polynomials of the voltage waves eu, ev and ew into polynomials indicating the d-axis voltage wave ed and the q-axis voltage wave eq, the extraction process for extracting one or more terms indicating relatively large values among the terms of each of the polynomials indicating the d-axis voltage wave ed and the q-axis voltage wave eq respectively as each of the d-axis disturbance voltage ΔVd and the q-axis disturbance ΔVq, and by the disturbance term adding process for adding the disturbance voltage estimating term indicating the d-axis disturbance voltage ΔVd and the q-axis disturbance ΔVq to the voltage equation on the basis of the extraction results.

Accordingly, by means of the optimizing method of the synchronous motor control, the synchronous motor control device is optimized so as to appropriately follow the fluctuations of the d-axis and the q-axis inductances Ld and Lq. As a result, the synchronous motor control device that appropriately follows the fluctuations of the d-axis and q-axis inductances Ld and Lq of the synchronous motor that is vector-controlled, is achieved.
A synchronous motor control device, includes a coordinate transformation portion (2) for coordinate transforming motor currents (iu, iv, iw) applied to respective three phases (U-phase, V-phase, W-phase) of a synchronous motor (1) into a d-axis, corresponding to a direction of a magnetic field generated by a permanent magnet arranged at a rotor of the synchronous motor (1), and a q-axis orthogonal to the d-axis, a current command calculation portion (4) for calculating a d-axis current command (Idr) and a q-axis current command (Iqr) from a target torque, a voltage command calculation portion (5) for calculating a d-axis voltage command (Vdr) and a q-axis voltage command (Vqr), an inverse coordinate transformation portion (6) for inversely coordinate transforming the d-axis voltage command (Vdr) and the q-axis voltage command (Vqr) into three-phase voltage commands (vu, vv, vw), and a torque ripple estimating portion (9) for estimating a torque ripple and feed-forwarding the estimation results to the current command calculation portion (4) or the voltage command calculation portion (5).

## Claims

1. A synchronous motor control device, comprising:
a coordinate transformation portion (2) for coordinate converting motor currents (iu, iv, iw) applied to respective three phases (U-phase, V-phase, W-phase) of a synchronous motor (1) into a d-axis, corresponding to a direction of a magnetic field generated by a permanent magnet arranged at a rotor of the synchronous motor (1), and a q-axis orthogonal to the d-axis;
a current command calculation portion (4) for calculating a d-axis current command (Idr) and a q-axis current command (Iqr) from a target torque on the basis of a torque equation representing a torque of the synchronous motor (1) by using the interlinkage magnetic flux, formed by the magnetic field, a d-axis inductance (Ld), a q-axis inductance (Lq), a d-axis current (Id) and a q-axis current (Iq);
a voltage command calculation portion (5) for calculating a d-axis voltage command (Vdr) and a q-axis voltage command (Vqr) from the d-axis current command (Idr) and the q-axis current command (Iqr) respectively on the basis of a voltage equation representing a voltage driving the synchronous motor (1) by using the interlinkage magnetic flux, formed by the magnetic field, impedances, including the d-axis inductance (Ld) and the q-axis inductance (Lq), of stator coils (1u, 1v, 1w) of the synchronous motor (1), the d-axis current (Id) and the q-axis current (Iq);
an inverse coordinate transformation portion (6) for inversely coordinate transforming the d-axis voltage command (Vdr) and the q-axis voltage command (Vqr) into three-phase voltage commands (vu, vv, vw) of respective three-phases (U-phase, V-phase, W-phase) of the synchronous motor (1); and
a torque ripple estimating portion (9) for estimating a torque ripple by setting the d-axis inductance (Ld) and the q-axis inductance (Lq) in the torque equation as a function (Ld (Id, θ) of the d-axis current (Id) and an electrical angle (θ) and a function (Lq (Iq, θ) of the q-axis current (Iq) and the electrical angle (θ) respectively, and feed-forwarding the estimation results to the current command calculation portion (4) or the voltage command calculation portion (5).

2. The synchronous motor control device according to Claim 1, wherein the d-axis inductance (Ld) and the q-axis inductance (Lq) in the voltage equation are set as the function (Ld (Id, θ) of the d-axis current (Id) and the electrical angle (θ) and the function (Lq (Iq, θ) of the q-axis current (Iq) and the electrical angle (θ), respectively.

3. The synchronous motor control device according to Claim 1 or Claim 2, wherein the voltage command calculation portion (5) calculates the d-axis voltage command (Vdr) and the q-axis voltage command (Vqr) on the basis of the voltage equation to which a disturbance voltage estimating term, which indicates disturbance voltages relative to the d-axis current (Id) and the q-axis current (Iq) estimated by identifying high-order coefficients of harmonic components included into three-phase interlinkage magnetic flux waves (ψu, ψv, ψw), is added.

4. A method for optimizing a synchronous motor control for coordinate transforming motor currents (iu, iv, iw) applied to respective three phases (U-phase, V-phase, W-phase) of a synchronous motor (1) into a d-axis, corresponding to a direction of a magnetic field generated by a permanent magnet arranged at a rotor of the synchronous motor (1), and a q-axis orthogonal to the d-axis, and for optimizing a vector-control of the synchronous motor (1) based on a torque equation, using an interlinkage magnetic flux, formed by the magnetic field, a d-axis inductance (Ld), a q-axis inductance (Lq), d-axis current (Id) and q-axis current (Iq), and a voltage equation using the interlinkage magnetic flux, formed by the magnetic field, impedances, including the d-axis inductance (Ld) and the q-axis inductance (Lq), of stator coils (1u, 1v, 1w) of the synchronous motor (1), the method comprising:
an inductance linearization process for setting the d-axis inductance (Ld) and the q-axis inductance (Lq) in the torque equation and the voltage equation as a function (Ld (Id, θ) of the d-axis current (Id) and an electrical angle (θ) and a function (Lq (Iq, θ) of the q-axis current (Iq) and the electrical angle (θ), respectively.

5. The method for optimizing the synchronous motor control according to Claim 4, wherein the inductance linearization process includes;
a nonlinear inductance calculation process for calculating the d-axis inductance (Ld) and the q-axis inductance (Lq) as a nonlinear three-dimensional map indicating a relationship with the d-axis current (Id) and the electrical angle (θ) and a nonlinear three-dimensional map indicating a relationship with the q-axis current (Iq) and the electrical angle (θ), respectively;
a harmonic component extracting process for extracting harmonic components superimposed on the d-axis inductance (Ld) and the q-axis inductance (Lq) on the basis of the nonlinear three-dimensional maps, respectively;
a weight function setting process for setting weight functions by using the d-axis current (Id) and the q-axis current (Iq) respectively that act as weighting coefficients of the harmonic components; and
an offset function setting process for setting amplitude offset functions by using d-axis current (Id) and the q-axis current (Iq) that act as weighting coefficients of amplitude offset components of the d-axis inductance (Ld) and the q-axis inductance (Lq), respectively.

6. The method for optimizing the synchronous motor control according to Claim 4 or Claim 5, further comprising a disturbance estimating process for optimizing the voltage equation by adding a disturbance voltage estimating term indicating estimated disturbances relative to a d-axis voltage (Vd) and a q-axis voltage (Vq) calculated by the voltage equation.

7. The method for optimizing the synchronous motor control according to Claim 6, wherein the disturbance estimating process includes:
a magnetic flux wave obtaining process for obtaining interlinkage magnetic flux waves (ψu, ψv, ψw) when the synchronous motor (1) is driven without any loads applied thereto;
an expansion process for expanding each of the interlinkage magnetic flux waves (ψu, ψv, ψw) in series into a polynomial where a trigonometric function is used;
a differentiation process for differentiating the polynomials of the interlinkage magnetic flux waves (ψu, ψv, ψw) and then transforming the differentiated polynomials of the interlinkage magnetic flux waves (ψu, ψv, ψw) into polynomials of voltage waves (eu, ev, ew), respectively;
a coordinate transformation process for coordinate transforming the polynomials of the voltage waves (eu, ev, ew) into polynomials indicating a d-axis voltage wave (ed) and a q-axis voltage wave (eq);
an extraction process for extracting one or more terms indicating relatively large values among terms of each of the polynomials indicating the d-axis voltage wave (ed) and the q-axis voltage wave (eq) respectively as each of a d-axis disturbance voltage (ΔVd) and a q-axis disturbance (ΔVq); and
a disturbance term adding process for adding the disturbance voltage estimating term indicating the d-axis disturbance voltage (ΔVd) and the q-axis disturbance (ΔVq) to the voltage equation on the basis of the extraction results.

8. The synchronous motor control device optimized by the method for optimizing the synchronous motor control according to any one of Claims 4 to 7.
